# EUROPEAN PATENT SPECIFICATION

(11) **EP 0 494 977 B1**
(45) Date of publication and mention of the grant of the patent: **30.08.1995**
(21) Application number: 90915799.2
(22) Date of filing: 08.10.1990
(51) Int. Cl.: C23C 12/02

(54) **METHOD OF MODIFYING THE SURFACE OF A SUBSTRATE**
VERFAHREN ZUM ÄNDERN EINES OBERFLÄCHENBEREICHES EINES WERKSTÜCKES
PROCEDE DE MODIFICATION DE LA SURFACE D'UN SUBSTRAT

(30) Priority: 07.10.1989 GB 8922629
(43) Date of publication of application: 22.07.1992
(73) Proprietor: THE UNIVERSITY OF BIRMINGHAM, Birmingham B15 2TT (GB)
(72) Inventor: BELL, Thomas, Merseyside L23 6SX (GB); BLOYCE, Andrew, Hants S05 3NQ (GB); MORTON, Peter, Harlow, West Midlands B93 9PW (GB)
(74) Representative: Pearce, Anthony Richmond
(86) International application number: GB9001541
(87) International publication number: WO9105072

(56) References cited:
- EP-A- 0 031 197
- EP-A- 0 246 828
- WO-A-86/02868
- DE-A- 2 725 541
- FR-A- 1 134 626
- FR-A- 2 256 962
- FR-A- 2 385 810
- US-A- 4 212 900
- Metal Science and Heat Treatment, volume 26, no. 5/6, May-June 1984, PlenumPublishing Corporation, Yu. M. Lakhtin et al.: "Savings of metal and power bythe introduction of progressive processes of heat treatment and thermochemicaltreatment", pages 335-336
- Materials Science and Technology, Vol. 5, July 1989, J.H. Abboud and D.R.F. West, Ceramic-Metal Composites Produced by Laser Surface Treatment, Pages 725-728.

## Description

This invention relates to a method of modifying the surface of a metal substrate to impart improved properties thereto. The present invention is particularly applicable to substrates of titanium, zirconium or hafnium or an alloy based on any of these metals, ie an alloy in which such metal is present in an amount greater than any one of the other components of the alloy.

Although titanium is strong and light, applications of titanium in general engineering are limited by its poor tribological properties. It is therefore desirable to provide a hardened layer from 0.1 to 2 mm deep on the surface of titanium or a titanium alloy in order to enhance its wear properties.

It has been proposed to improve the hardness and wear resistance of titanium by making alloy additions to the surface layer thereof. It has also been proposed to produce significant alloy additions to depths of around 1 millimetre by scanning the surface with a high energy beam such as a laser or electron beam in an atmosphere containing nitrogen and/or carbon, so as to produce a molten pool of titanium in which nitrogen and/or carbon become dissolved. Quenching of the molten pool containing the dissolved nitrogen and/or carbon takes place as a result of the presence of the main mass of the relatively cool substrate. It has also been proposed to incorporate carbon by carbide particle injection.

EP-A-0246828 discloses a method of modifying the surface of titanium or titanium alloy members to improve wear-resistance, in which method the surface of the member is melt-hardened, e.g, by means of a plasma jet containing an inert gas and a hardening gas (e.g, nitrogen, carbon dioxide, carbon monoxide, oxygen, methane and ammonia), while applying hardening alloy elements (such as Al, Sn, B, Fe, Cr, Ni, Mn, Cu, Si, Ag, W, Mo, V, Nb, Cb, Ta, and Zr) to the surface of the member. EP-A-0246828 also discloses the possibility of mixing titanium or at least one compound of the group comprising carbides, nitrides and oxides with the hardening alloy elements, and applying the resulting mixture to the surface. TiC and SiC are given as examples of carbide, TiN and Si₃N₄ are given as examples of nitride, and Al₂O₃ and TiO₂ are given as examples of the oxide. In one of the tests described in EP-A-0246828, Ni and SiC are applied to the surface of a titanium alloy part and the resultant hardened region is disclosed as having the composition 4Al-15V-18Ni-12SiC-Ti and a hardness of 508Hv.

DE-A-2725541 discloses a method of hardening the surface of a titanium or titanium alloy workpiece in which method a thin layer of a boride and/or a carbide of at least one of titanium, vanadium, zirconium or niobium is applied to the surface region of the workpiece and is melted into the surface by means of a laser beam or an electron beam.

Yu. M. Lakhtin et al in "Hardening the Surface of Titanium Alloys by Laser Alloying", Metal Science and Heat Treatment, 1984, Vol. 26, pages 335/6 disclose the use of a laser to carboboronize or carbosiliconize titanium alloy surfaces so as to increase (a) the surface hardness from about H299-376 to H1430-2290, (b) the wear resistance (using an abrasion test) by up to two orders of magnitude, and (c) the corrosion resistance. The formation of a continuous layer of intermetallic phase on the surface is disclosed.

It is an object of the present invention to provide a method of modifying the surface of a substrate of titanium, zirconium or hafnium or an alloy based on any of these, to improve the resistance to rolling wear or rolling and sliding contact wear.

According to the present invention, there is provided a method of modifying the surface of a substrate selected from the group consisting of the metals titanium, zirconium and hafnium and alloys based on any of these metals, said method comprising the steps of applying a solid material containing carbon and silicon to a layer at the surface of the substrate, melting the layer having said solid material applied thereto, and thereafter cooling the molten metallic layer so as to solidify the latter with the silicon and carbon incorporated therein, characterised in that the silicon and the carbon are dissolved in the molten metallic layer so that, upon solidification, there is formed at the surface of the substrate a solid metallic layer containing carbon interstitially and silicon as a substitutional alloying element which substitutes a portion of said metal on which said substrate is based, and in that the solid material is added in an amount such that said silicon is present in the molten layer in an amount of from 5 up to 25 atomic %.

Upon further cooling, said solid metallic layer may undergo solid state reactions and as a consequence after cooling, carbon may be in solid solution and/or in a precipitate, and silicon may also be in a solid solution and/or in a precipitate

Also according to the present invention, there is provided a component comprising a substrate selected from the group consisting of the metals titanium, zirconium and hafnium and alloys based on any of these metals, said substrate having a surface layer on at least a part thereof, said surface layer containing silicon and carbon, characterised in that the carbon has entered into interstitial solution in a phase in said layer and has optionally at least partially precipitated from solution, and in that the silicon has substituted a portion of the metal of which the substrate is based and has optionally at least partially precipitated from solid solution, and in that said silicon is present in an amount of from 5 up to 25 atomic %.

In order to increase the concentration of carbon and silicon in the molten pool, a second application of the solid material may be made after the molten surface has solidified and a second melting process carried out. Alternatively, a second melting process may be carried out without recourse to a second application of solid material and in this way it is possible to improve the smoothness of the as-solidified surface.

It will be appreciated that the method of the present invention involves the use of a solid material which provides alloying elements serving two functions, and therefore capable of effecting complementary mechanisms to strengthen and enhance the wear resistance of the surface.

The solid material is conveniently silicon carbide or a mixture of silicon carbide and silicon.

The amount of said silicon included in the molten layer is from 5 atomic% up to 25 atomic%, preferably 10 atomic% to 15 atomic%. Where the substrate is titanium or a titanium based alloy, this corresponds approximately to a range of preferably 3 to 16 weight%, more preferably 6 to 10 weight%, of silicon in the molten layer.

The atomic ratio of silicon to carbon in the molten layer is preferably 1:3 to 3:1, more preferably 1:1 to 3:1.

In the case where silicon carbide is used as the solid material and the metallic layer is titanium or an alloy based on titanium, it is believed that the silicon from the silicon carbide dissolves in the liquid titanium which solidifies as a substitutional solid solution of body-centred cubic beta phase. Small amounts of primary titanium silicide may also be formed on solidification. On subsequent cooling and phase transformation, some of the silicon remains in solid solution and some of it is precipitated as fine particles of titanium silicide, Ti₅-Si₃ . It is believed that the carbon from the silicon carbide initially dissolves to produce an interstitial solid solution but on cooling precipitates out to form in addition a fine distribution of titanium carbide which is present principally as a constituent of a eutectic phase but which may also appear as carbide dendrites.

The combination of solid solution of the carbon and silicon together with the formation of precipitated compounds containing carbon and/or precipitated compounds containing silicon, produces a hardened surface layer having improved resistance to wear, particularly under conditions of high contact load and either rolling or mixed rolling and sliding contact.

The method is preferably conducted so that the minimum depth of the modified layer is 0.1 mm. The maximum depth is usually about 2 mm. with the preferred depth being of the order of 1 mm.

The solid material may be provided on the substrate by any desired means such as by painting or spraying of a solid material slurry or suspension which may or may not contain a temporary binder. The applied layer is allowed to dry before surface melting with a high energy beam such as a scanning laser or electron beam. The power and rate of scan of the high energy beam can be chosen to effect the desired degree of melting at the surface. Instead of using a laser or electron beam, it is within the scope of the present invention to effect heating using an electric arc such as that provided by a tungsten-inert gas torch. It is important to melt only the surface layer portion of the substrate. Maintaining a relatively cool substrate not only ensures fast quenching of the molten layer, but also ensures that any desirable microstructure which has been previously developed in the substrate will not be lost through overheating of the latter.

The present invention will now be described in further detail in the following Example:-

### Example

A layer of silicon carbide was applied to the surface of a titanium alloy (Ti-6Al-4V) having a thickness of 12 mm. The silicon carbide was applied by painting a slurry of commercially available silicon carbide powder having an average particle size of 10 »m and drying it to provide a dense silicon carbide layer in intimate contact with the surface of the substrate. The coating weight of silicon carbide ranged from 200-1000 g (e.g. typically 400-500 g) per square metre of surface area. The thus coated substrate was then subjected to surface melting using a scanning electron beam provided by a machine sold by Carl Zeiss under the identification ES 1013. The electron beam employed had a focused spot of 0.2 mm. diameter with beam parameters of 100 kW and 3 mA which was traversed at a feed rate of 10 to 200 mm/s to provide tracks of 1 to 0.1 mm. deep with a good surface finish. During traverse of the electron beam, localised melting of the surface layer of the titanium substrate occurred under the silicon carbide layer to form a small pool in which dissolution of the silicon carbide took place with convective mixing. After passage of the traversing beam, solidification of the molten pool occurred rapidly as a result of heat transfer to the relatively cool main body of the substrate under the pool. The depth of melting could be chosen to suit the intended requirements by appropriate selection of the power and/or traverse rate of the high energy beam. The degree of alloying could be chosen by appropriate selection of the ratio of coating thickness to total melt depth.

In one series of experiments, the microhardness of the surface alloyed layer was in the range 650 to 700 Hᵥ and the microstructure consisted of finely divided primary titanium carbide, a major constituent of alpha titanium containing silicon in solution and a eutectic phase. Substantial amounts of the intermetallic compound Ti₅-Si₃ were identified by X-ray diffraction. This microstructure was compared with the microstrucure of bulk alloys prepared by melting titanium, silicon and carbon, which demonstrated that the composition of the alloyed surface contained in the region of 8.5 weight% silicon and 3.6 weight% carbon.

In another series of experiments, the lubricated wear resistance of a disc of commercial titanium alloy
(Ti-6Al-4V) which had been surface alloyed with silicon and carbon (1:1 atomic ratio) according to the invention was compared with untreated alloy and with EN 19 steel. Before testing, the alloyed surface had been machined and ground to give a 0.5 »m Rₐ finish, the depth of alloyed layer measured as 200 to 300 »m and the microhardness measured in the range of 650 to 700 Hᵥ. When tested under conditions of rolling with 30% sliding, under an applied load of 13 kg, a steady state wear rate was achieved with the surface alloyed disc for an extended period which was one hundredth of that of the untreated alloy and was approximately equal to that a hardened steel surface. When the same test was carried out with an applied load of 120 kg, a steady state wear rate was again achieved, although for a shorter period, and this was one thousandth of that of the untreated alloy and again approximately equal to that of hardened steel.

## Claims

1. A method of modifying the surface of a substrate selected from the group consisting of the metals titanium, zirconium and hafnium and alloys based on any of these metals, said method comprising the steps of applying a solid material containing carbon and silicon to a layer at the surface of the substrate, melting the layer having said solid material applied thereto, and thereafter cooling the molten metallic layer so as to solidify the latter with the silicon and carbon incorporated therein, characterised in that the silicon and the carbon are dissolved in the molten metallic layer so that, upon solidification, there is formed at the surface of the substrate a solid metallic layer containing carbon interstitially and silicon as a substitutional alloying element which substitutes a portion of said metal on which said substrate is based, and in that the solid material is added in an amount such that said silicon is present in the molten layer in an amount of from 5 up to 25 atomic%.

2. A method as claimed in claim 1, wherein, upon further cooling, the carbon is in solid solution and/or in a precipitate, and the silicon is also in a solid solution and/or in a precipitate.

3. A method as claimed in claim 1 or 2, wherein, in order to increase the concentration of the carbon and the silicon in the molten pool, a second application of the solid material is made after the molten surface has solidified and a second melting process carried out.

4. A method as claimed in claim 1 or 2, wherein a second melting process is carried out without any further application of the solid material.

5. A method as claimed in any preceding claim, wherein the solid material is added in an amount such that said silicon is present in the molten layer in an amount of from 10 to 15 atomic %.

6. A method as claimed in any preceding claim, wherein the atomic ratio of said silicon to said carbon is 1:3 to 3:1.

7. A method as claimed in any preceding claim, wherein the thickness of the surface layer is 0.1 to 2 mm.

8. A method as claimed in any preceding claim, wherein the solid material is silicon carbide or a mixture of silicon carbide and silicon.

9. A component comprising a substrate selected from the group consisting of the metals titanium, zirconium and hafnium and alloys based on any of these metals, said substrate having a surface layer on at least a part thereof, said surface layer containing silicon and carbon, characterised in that the carbon has entered into interstitial solution in a phase in said layer and has optionally at least partially precipitated from solution, in that the silicon has substituted a portion of the metal of which the substrate is based and has optionally at least partially precipitated from solid solution, and in that said silicon is present in an amount of from 5 up to 25 atomic % of said surface layer.

## Patentansprüche

1. Ein Verfahren zum Ändern der Oberfläche eines Substrates, welches aus der Gruppe mit den Metallen Titan, Zirkonium und Hafnium sowie mit den auf irgendeinem dieser Metalle beruhenden Legierungen ausgewählt worden ist, wobei dieses Verfahren die Schritte des Auftragens eines Kohlenstoff und Silizium enthaltenden festen Materials als eine Schicht auf die Oberfläche des Substrates, des Schmelzens der Schicht welche das besagte darauf aufgetragene feste Material aufweist, sowie des nachfolgenden Kühlens der geschmolzenen metallischen Schicht so daß die letztere sich mit dem darin einverleibten Silizium und Kohlenstoff verfestigt, in sich vereinigt, dadurch gekennzeichnet, daß das Silizium und der Kohlenstoff in der geschmolzenen metallischen Schicht aufgelöst werden, derart daß, als Folge der Verfestigung, sich an der Oberfläche des Substrates eine feste metallische Schicht bildet, welche interstitiellen Kohlenstoff sowie Silizium enthält, letzteres als ein substituierendes legierendes Element, welches einen Teil des besagten Metalles, auf welchem das besagte Substrat aufgebaut ist, ersetzt, und dadurch daß das feste Material in einer solchen Menge zugesetzt wird, daß das besagte Silizium in der geschmolzenen Schicht in einer von 5% bis zu 25% (Atomprozent) reichenden Menge anwesend ist.

2. Ein Verfahren wie es in Anspruch 1 beansprucht worden ist, in welchem, als Folge einer weiteren Kühlung, sich das Kohlenstoff in fester Lösung und/oder in einer Ausscheidung vorfindet, und sich das Silizium ebenfalls in einer fester Lösung und/oder in einer Ausscheidung vorfindet.

3. Ein Verfahren wie es in Anspruch 1 oder 2 beansprucht worden ist, in welchem, zwecks Erzielung einer Erhöhung der Konzentration des Kohlenstoffs und des Siliziums in dem geschmolzenen Sumpf, ein zweites Auftragen des festen Materials erfolgt nachdem sich die geschmolzene Oberfläche wieder verfestigt hat, sowie eine zweite Behandlung durch Aufschmelzen durchgeführt wird.

4. Ein Verfahren wie es in Anspruch 1 oder 2 beansprucht worden ist, in welchem eine zweite Behandlung durch Aufschmelzen durchgeführt wird ohne daß ein weiteres Auftragen des festen Materials erfolgen würde.

5. Ein Verfahren wie es in irgendeinem der vorhergehenden Ansprüche beansprucht worden ist, in welchem das feste Material in einer solchen Menge hinzugefügt wird, daß das Silizium in der geschmolzenen Schicht in einer zwischen 10% und 15% (Atomprozent) liegenden Menge anwesend ist.

6. Ein Verfahren wie es in irgendeinem der vorhergehenden Ansprüche beansprucht worden ist, in welchem das Atomverhältnis zwischen dem Silizium und dem Kohlenstoff zwischen 1:3 und 3:1 liegt.

7. Ein Verfahren wie es in irgendeinem der vorhergehenden Ansprüche beansprucht worden ist, in welchem die Dicke der Oberflächenschicht zwischen 0,1 und 2 mm liegt.

8. Ein Verfahren wie es in irgendeinem der vorhergehenden Ansprüche beansprucht worden ist, in welchem das feste Material aus Siliziumcarbid oder aus einer Mischung aus Siliziumcarbid und Silizium besteht.

9. Eine ein Substrat aufweisende Komponente, welches aus der Gruppe mit den Metallen Titan, Zirkonium und Hafnium sowie mit den auf irgendeinem dieser Metalle beruhenden Legierungen ausgewählt worden ist, wobei dieses Substrat eine Oberflächenschicht auf wenigstens einem Teil dieses Substrates aufweist, wobei die Oberflächenschicht Silizium und Kohlenstoff enthält, dadurch gekennzeichnet, daß der Kohlenstoff in einer Phase der Schicht in interstitielle Lösung getreten ist und daß er auf fakultativer Basis wenigstens teilweise aus der Lösung heraus ausgeschieden ist, daß das Silizium einen Teil des Metalles auf welchem das Substrat aufgebaut ist ersetzt hat und daß es auf fakultativer Basis wenigstens teilweise aus der festen Lösung heraus ausgeschieden ist, und daß das Silizium in einer von 5% bis zu 25% (Atomprozent) reichenden Menge der Oberflächenschicht anwesend ist.

## Revendications

1. Un procédé de modification de la surface d'un substrat choisi dans le groupe constitué par les métaux titane, zirconium et hafnium ainsi que par les alliages basés sur un quelconque de ces métaux, ledit procédé comprenant les étapes d'application d'un matériau solide contenant du carbone et du silicium sur une couche à la surface du substrat, de fusion de la couche pourvue dudit matériau solide appliqué sur ladite couche, et de refroidissement subséquent de la couche métallique fondue de manière à solidifier cette dernière ensemble avec le silicium et avec le carbone incorporés dans cette couche, caractérisé en ce que le silicium et le carbone sont dissous dans la couche de métal fondu de telle manière qu'à la suite de la solidification il y a formation, à la surface du substrat, d'une couche métallique solide contenant du carbone interstitiellement ainsi que du silicium comme un élément d'alliage de substitution, qui se substitue à une partie dudit métal sur lequel ledit substrat est basé, et en ce que le matériau solide est ajouté en une quantité telle que ledit silicium est présent dans la couche fondue en une quantité allant de 5% à 25% atomiques.

2. Un procédé tel que revendiqué dans la revendication 1, dans lequel, à la suite d'un refroidissement plus avancé, le carbone se trouve en solution solide et/ou à l'état de précipité, et le silicium se trouve également en solution solide et/ou à l'état de précipité.

3. Un procédé tel que revendiqué dans la revendication 1 ou 2, dans lequel, afin d'accroître la concentration du carbone et du silicium dans le bain fondu, une deuxième application du matériau solide est effectuée, une fois que la surface fondue s'est solidifiée, et une deuxième traitement de fusion est exécuté.

4. Un procédé tel que revendiqué dans la revendication 1 ou 2, dans lequel un deuxième traitement de fusion est exécuté sans une quelconque autre application de matériau solide.

5. Un procédé tel que revendiqué dans une quelconque des revendications précédentes, dans lequel le matériau solide est ajouté en une quantité telle que ledit silicium est présent dans la couche fondue en une quantité allant de 10% à 15% atomiques.

6. Un procédé tel que revendiqué dans une quelconque des revendications précédentes, dans lequel le rapport atomique dudit silicium audit carbone est compris entre 1:3 et 3:1.

7. Un procédé tel que revendiqué dans une quelconque des revendications précédentes, dans lequel l'épaisseur de la couche de surface est comprise entre 0.1 et 2 mm.

8. Un procédé tel que revendiqué dans une quelconque des revendications précédentes, dans lequel le matériau solide est du carbure de silicium ou un mélange de carbure de silicium et de silicium.

9. Un composant comprenant un substrat choisi dans le groupe constitué par les métaux titane, zirconium et hafnium ainsi que par les alliages basés sur un quelconque de ces métaux, ledit substrat comportant une couche de surface s'étendant sur au moins une partie de ladite surface, ladite couche de surface contenant du silicium et du carbone, caractérisé en ce que le carbone est entré en solution interstitielle dans une phase dans ladite couche et s'est facultativement précipité au moins partiellement hors de la solution, et en ce que le silicium s'est substitué à une partie du métal sur lequel ledit substrat est basé et s'est facultativement précipité au moins partiellement hors de la solution solide, et en ce que ledit silicium est présent en une quantité allant de 5% à 25% atomiques de ladite couche de surface.
